# EUROPÄISCHE PATENTANMELDUNG

(11) **EP 0 671 140 A1**
(43) Veröffentlichungstag der Anmeldung: **13.09.1995**
(21) Anmeldenummer: 95103624.3
(22) Anmeldetag: 13.03.1995
(51) Int. Cl.: A47J 27/092, A47J 27/08

(54) **Dampfdruckkochtopf sowie Dichtungsring und Dichtungsring/Gleitring-Kombination für einen solchen**

(30) Priorität: 11.03.1994 DE 4408161; 09.09.1994 DE 4432083
(71) Anmelder: FISSLER GMBH, D-55743 Idar-Oberstein (DE)
(72) Erfinder: Thelen, Arnold, D-55743 Idar-Oberstein (DE); Steude, Dietrich Dr., D-55543 Bad-Kreuznach (DE); Dietrich, Uwe, D-55758 Niederhosenbach (DE)
(74) Vertreter: KEIL & SCHAAFHAUSEN Patentanwälte

(57) **Zusammenfassung**

Die Erfindung bezieht sich auf einen Dampfdruckkochtopf mit einem für die Aufnahme von Kochgut bestimmten Behälter und einem auf diesen aufsetzbaren Deckel, wobei der Behälter und der Deckel durch Verdrehen gegeneinander mittels Randverriegelungselementen nach Art einer Bajonettverbindung gegeneinander verriegelbar und wieder voneinander lösbar sind, und mit einem im Bereich des Deckelrandes und des Behälterrandes umlaufenden Dichtungsring für die Abdichtung des Topfinnenraumes in Verriegelungsstellung von Behälter und Deckel gegen Druckabfall, wobei beim Verdrehen des Deckels gegenüber dem Behälter der Reibungskoeffizient im Bereich der Anlage des Dichtungsrings an dem Deckel geringer ist als der Reibungskoeffizient im Bereich der Anlage des Dichtungsrings an dem Behälter, wobei insbesondere dem Dichtungsring im Bereich der Deckelanlage ein Gleitring zugeordnet ist. Gegenstand der Erfindung ist auch ein für einen solchen Dampfdruckkochtopf geeigneter Dichtungsring bzw. eine Dichtungsring/Gleitring-Kombination.

## Beschreibung

Die Erfindung bezieht sich auf einen Dampfdruckkochtopf mit einem für die Aufnahme von Kochgut bestimmten Behälter und einem auf diesen aufsetzbaren Deckel, wobei der Behälter und der Deckel durch Verdrehen gegeneinander mittels Randverriegelungselementen nach Art einer Bajonettverbindung gegeneinander verriegelbar und wieder voneinander lösbar sind, und mit einem im Bereich des Deckelrandes und des Behälterrandes umlaufenden Dichtungsring für die Abdichtung des Topfinnenraumes in Verriegelungsstellung von Behälter und Deckel gegen Druckabfall.

Aus der EP-B-0 247 406 ist ein Dampfdruckkochtopf aus einem Kochgut aufnehmenden Behälter, einem darauf aufsetzbaren Deckel mit Sicherheitsventil, einer Behälter und Deckel im Schließzustand aneinander festlegenden Schließeinrichtung und einer zwischen Deckel und Behälter angeordneten, im Schließzustand den Topfinnenraum gegen Druckabfall sichernden Dichtung bekannt, wobei eine radial einwärts weisende Dichtlippe der Dichtung am Deckel oder am Behälter anliegt, die beim Niederdrücken des Deckels in Richtung auf den Behälter mittels eines hebelartigen Elements aus der dichtenden Anlage am Deckel oder am Behälter abhebt und wobei der Deckel oder der Behälter beim anschließenden Bewegen des Deckels in die Öffnungsstellung eine Relativbewegung zur Dichtlippe ausführt. Dabei soll zwischen der Dichtlippe und dem Deckel oder dem Behälter ein ringartiges Gleitelement radial und außerhalb des Randes der Dichtlippe angeordnet sein, welches aus einem Werkstoff besteht, der mit dem Behälter bzw. Deckel eine Gleitpaarung von geringem Reibbeiwert ergibt und das Hebellager bildet. Beim Öffnen eines solchen Dampfdruckkochtopfes muß der Benutzer zunächst den Deckel in Richtung des Behälters drücken, um die Dichtung aus der dichtenden Anlage am Deckel oder am Behälter abzuheben, was mittels eines hierfür bestimmten hebelartigen Elements erfolgt, welches selbst nur einen geringen Reibbeiwert zu dem Behälter bzw. Deckel bildet.

Die Erfindung bezieht sich im Unterschied dazu auf einen Dampfdruckkochtopf, bei welchem Öffnungs- und Schließstellung von Behälter und Deckel ausschließlich durch Relativverdrehung von Behälter und Deckel zueinander eingenommen werden. Bei dem Dichtsystem eines solchen Dampfdruckkochtopfes dichten die unter Vorspannung stehenden Lippen eines Dichtungsringes den Topfinnenraum ab und erzeugen beim Öffnen und Schließen eine hohe Reibungskraft, zu deren Überwindung die Stielgriffe von Behälter und Deckel als lange Hebelarme zur Relativverdrehung von Deckel und Behälter erforderlich sind.

Aufgabe der Erfindung ist es, einen Dampfdruckkochtopf der eingangs genannten Art vorzuschlagen, dessen Deckel relativ zu dem Behälter ohne Veränderung der Lage oder Gestalt des Dichtungsringes leichtgängig verdreht werden kann, so daß der Dampfdruckkochtopf z. B. auch mittels eines an dem Deckel vorgesehenen Zentralknopfes in den Verriegelungszustand und in den Öffnungszustand überführt werden kann.

Diese Aufgabe wird erfindungsgemäß im wesentlichen z. B. dadurch gelöst, daß beim bloßen Verdrehen des Deckels gegenüber dem Behälter der Reibungskoeffizient im Bereich der unmittelbaren oder mittelbaren Anlage des Dichtungsrings an dem Deckel geringer ist als der Reibungskoeffizient im Bereich der unmittelbaren oder mittelbaren Anlage des Dichtungsrings an dem Behälter, oder umgekehrt.

Dabei kann ein an dem Deckel vorgesehener Zentralverschluß in dem mittigen Deckelgriff integriert und so funktionell ausgebildet sein, daß ein Verdrehen des Deckels gegenüber dem Behälter in Öffnungsstellung erst möglich ist, wenn der Topfinnenraum durch Zwangsbetätigen eines Druckentlastungsventils druckentlastet ist. Es kann aber auch ein willkürlich betätigbares Druckentlastungsventil vorgesehen sein, um den Topf drucklos machen zu können, damit ein Verdrehen des Deckels gegenüber dem Behälter ermöglicht wird. Ferner kann eine Nulldruck-Sicherung im Randbereich der Behälter/Deckel-Kombination vorgesehen sein, welche beim Öffnen des Deckels anspricht. Beim anschließenden Verdrehen des Deckels gegenüber dem Behälter in Öffnungsstellung bleibt bei der ersten Alternative der Erfindung der an dem Behälter anliegende Dichtungsring festliegen, während sich der Deckel relativ zu dem Dichtungsring verdreht, dadurch bedingt, daß der Reibungskoeffizient zwischen dem üblicherweise für einen Dichtungsring verwendeten Dichtungsmaterial, wie Nitrilkautschuk und dem Behälterrand aus Edelstahl, verhältnismäßig groß ist, während der Gleitring auf Grund seines Materials, wie z. B. Polytetrafluoräthylen, in Kombination mit dem Deckelmaterial Edelstahl ein günstigeres Gleitverhalten hat. Die leichte Öffenbarkeit des Dampfdruckkochtopfes kann dabei also auf einfache Weise dadurch erzielt werden, daß dem Dichtungsring im Bereich der Deckelanlage ein Gleitring zugeordnet ist, während er an dem Behälterrand während des Öffnungsvorganges (und auch während des Schließvorganges) fest liegenbleibt. Auf diese Weise wird zusätzlich die Abnützung des Dichtringes verringert. Bei der anderen erfindungsgemäßen Alternative bleibt der Dichtungsring beim Verdrehen des Deckels gegenüber dem Behälter in dem Deckel fest liegen und gleitet leichtgängig am Behälterrand.

Im folgenden wird nur die erste erfindungsgemäße Alternative näher erörtert. Entsprechendes gilt jedoch jeweils auch für die zweite Alternative, wenn man die Begriffe "Deckel" und "Behälter" vertauscht.

Der Gleitring kann Bestandteil des Dichtringes oder als gesondertes Teil ausgebildet aber mit dem Gleitring drehfest verbunden sein.

Hierbei ist es möglich, daß der Gleitring als selbständiges Bauteil am Deckel gehalten ist und entweder beim Vedrehen des Deckels gegenüber dem Behälter der Reibungskoeffizient zwischen Gleitring und Deckel geringer ist als der Reibungskoeffizient zwischen Gleitring und Dichtungsring, oder der Gleitring drehfest mit dem Dichtungsring verbunden ist.

Von besonderem Vorteil ist es, wenn der Gleitring materialschlüssig mit dem Dichtungsring verbunden ist, als z. B. dadurch, daß der Gleitring eine Oberflächenschicht des Dichtungsringes bildet, um dadurch das günstigste Gleitverhalten in Kombination mit Edelstahl zu erbringen.

Zur Verwirklichung der Erfindung ist es nicht erforderlich, daß der Gleitring über den Gesamtumfang des Deckels gleichförmig umläuft, er kann auch aus einzelnen Umfangsabschnitten bestehen, wobei sicherzustellen ist, daß, obgleich der Dichtungsring im wesentlichen über die Umfangsabschnitte mit der Innenfläche des Deckels in Berührung steht, die innerste Umfangslinie des Gleitrings, zur Abdichtung gegenüber der Innenfläche der Deckelwandung geschlossen ist.

Bilden der Gleitring bzw. seine untereinander verbundenen Umfangsabschnitte von dem Dichtungsring gesonderte Bauteile, ist es zweckmäßig vorzusehen, daß der Gleitring bzw. dessen Umfangsabschnitte z. B. mittels Umfangselementen mechanisch an dem Dichtungsring montierbar ist bzw. sind, und entsprechend natürlich auch demontierbar, so daß je nach Verschleiß der einen oder anderen selbständig herstellbaren Komponente diese ausgetauscht werden kann.

Die Umfangselemente können z. B. als Verbindungsbolzen ausgebildet sein, welche über den Umfang verteilt in dem Material des Dichtungsrings lösbar verankerbar sind.

Für den Fall, daß der Dichtungsring unter Bildung eines Gleitringes aus einem Zwei-Komponenten-Verbundwerkstoff besteht, kann der Gleitring ebenfalls aus z. B. als dünner Film ausgebildetem Metall oder Kunststoff oder beidem bestehen.

Von besonderem Vorteil ist es, wenn der Gleitring nicht nur aus einem Material besteht, welches gegenüber Edelstahl im Vergleich zu den üblichen Dichtungsmaterialien wie Nitrilkautschuk einen wesentlich niedrigeren Reibungskoeffizienten hat, sondern selbst auch günstige Dichteigenschaften hat, selbst also aufgrund seiner Materialbeschaffenheit und/oder Gestaltung gegenüber seiner Anlagefläche an dem Deckelrand zuverlässig dichtend wirkt.

Die Montage ist dann besonders einfach, wenn der Gleitring und/oder der Dichtungsring aufgrund ihrer/seiner Eigenspannung im Deckel gehalten sind/ist, so daß besondere Hilfsmittel am Deckel für die Halterung von Gleitring und/oder Dichtungsring entbehrlich sind.

Dies kann z. B. dann auf einfache Weise erreicht werden, wenn der Gleitring und/oder der Dichtungsring in einem Winkel- oder Nutbereich des Deckelrandes aufgenommen sind/ist.

Für die Verwirklichung der Erfindung kann ein Gleitring z. B. ein flacher Materialstreifen bzw. eine dünne Materialschicht am Außenumfang des Dichtungsringes sein.

Zweckmäßigerweise ist der Gleitring in seiner Außenkontur der Innenkontur des Deckels angepaßt oder er paßt sich beim Einlegen unter Verformung in den Deckel an dessen Innenkontur an. Unter dem Topfinnendruck wird der Gleitring dann zuverlässig dichtend an die Deckelwandung angedrückt.

Sicherheitshalber kann der Gleitring aber auch mittels Blechring, Blechsegmenten oder dgl. an dem Deckel z. B. unter Einhaltung eines Spiels beweglich montierbar sein.

Zur Erhöhung der Dichtwirkung kann der Gleitring ferner in seiner dem Deckel zugewandten Seitenfläche in Abständen mit über den Umfang umlaufenden Nuten versehen sein.

Bei einer besonderen Ausgestaltung der Erfindung ist der Gleitring Abschnitt oder Teil einer gegenüber dem Deckel verdrehbaren Innenhaube, welche mit einem Gleitringbereich dichtend an der Innenfläche der Deckelwandung anliegt.

Der Dichtungsring kann dabei in einer Umfangsnut z. B. der Innenhaube aufgenommen sein.

Von Vorteil ist es ferner, wenn der Dichtungsring ein im Querschnitt im wesentlichen rechteckigen Basisabschnitt aufweist, von welchem ein oder zwei Dichtlippen wegragen, von welchen wenigstens die eine Dichtlippe in Schließstellung an dem Behälterrand anliegt.

Dabei kann der Dichtungsring mit wenigstens einer Seitenfläche des Basisabschnitts an dem Gleitring anliegen oder von ihm überdeckt sein.

Die ggf. vorgesehene andere Dichtlippe ist für die Anlage an dem Gleitring bestimmt bzw. ist von dem Gleitring überdeckt.

Ferner können sämtliche der Deckelwandungen zugekehrten Außenflächen des Basisabschnitts und der Dichtlippen entweder an dem Gleitring anliegen oder diesem zugekehrt sein oder von dem Gleitring überdeckt sein.

Ist der Gleitring von einem Wandabschnitt einer Innenhaube gebildet, so stützt sich die Innenhaube zweckmäßigerweise mit einem den Grund der Umfangsnut bildenden und als Gleitring ausgestalteten Wandungsabschnitt gleitend an der Innenfläche der Deckelwandung ab.

Dabei kann der Dichungsring mit seinem Basisabschnitt in der Umfangsnut z. B. der Innenhaube gehalten sein.

Die Erfindung bezieht sich auch auf einen Dichtungsring für den zuvor erörterten erfindungsgemäßen Dampfdruckkochtopf, wobei der Dichtungsring die zuvor erörterten Eigenschaften im Einzelnen und in Kombination miteinander haben kann.

Das gleiche gilt für die Dichtring/Gleitring-Kombination für einen zuvor erörter Dampfdruckkochtopf, wobei auch die Dichtungsring/Gleitring-Kombination jeweils einzelne oder mehrere der zuvor genannten Merkmale in Kombination enthalten kann.

Weitere Ziele, Merkmale, Vorteile und Anwendungsmöglichkeiten ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung auch unabhängig von ihrer Zusammenfassung in den Ansprüchen oder deren Rückbeziehungen.

Die Figuren zeigen jeweils einen Dampfdruckkochtopf der erfindungsgemäßen Art für verschiedene Ausgestaltungen und zwar jeweils im oberen linken Randbereich der Deckel/Behälter-Verriegelung geschnitten, wobei auch die erfindungsgemäßen Ausbildungen des Dichtringes selbst bzw. der Dichtung/Gleitring-Kombination erkennbar sind.

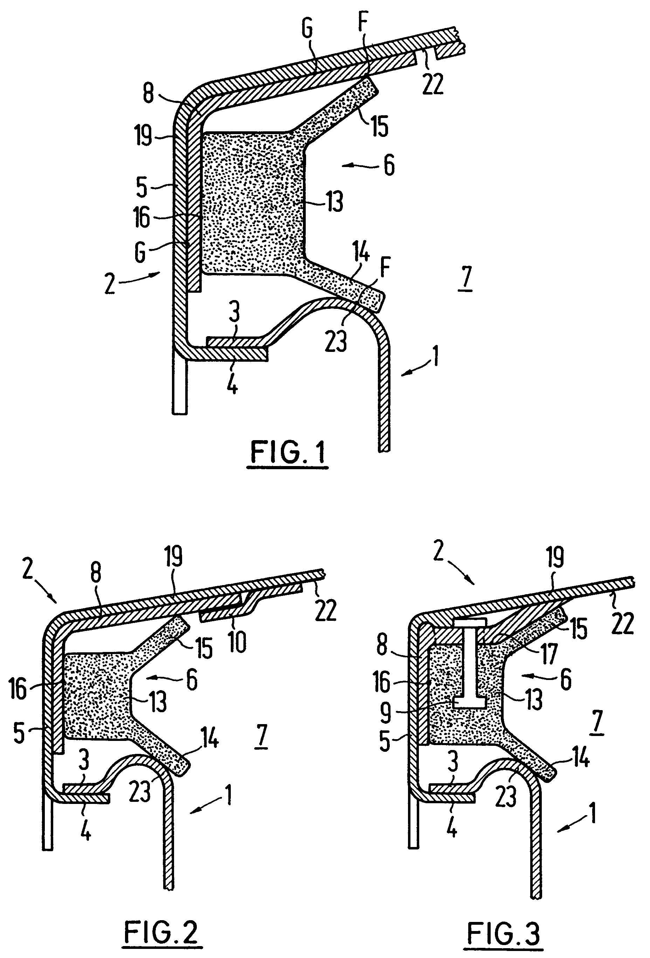

Bei der Ausführung gemäß Figur 1 sind der Behälter 1 und der Deckel 2 über an ihren jeweiligen Rändern 5, 23 vorgesehenen Randverriegelungselementen 3, 4 bajonettartig verriegelbar. Im Bereich des Deckelrandes 5 ist ein umlaufender Dichtungsring 6 vorgesehen, welcher einen Basisabschnitt 13 von im wesentlichen rechteckigen Querschnitt aufweist, von welchem in den Topfinnenraum 7 nach schräg oben bzw. unten zwei Dichtlippen 14, 15 wegragen. Die eine Dichtlippe 14 kommt in der dargestellten Verriegelungsstellung des Deckels 2 mit dem Behälterrand 23 dichtend zur Anlage, während die andere Dichtlippe 15 an einen als abgewinkelter Flachmaterialstreifen ausgebildeten Gleitring 8 dichtend zur Anlage kommt. Der Dichtungsring 6 stützt sich mit seiner äußeren Seitenfläche 16 seines Basisabschnitts 13 ebenfalls an dem Gleitring 3 ab oder ist mit diesem dort verbunden. Beim Verdrehen des Deckels 2 gegenüber dem Behälter 1 gleitet der Deckel 2 wegen des geringen Reibungskoeffizienten des Gleitringes 8 gegenüber dem Edelstahl der Deckelwandung 19 in den mit G bezeichneten Flächenbereichen, während der Dichtungsring 6 relativ zu dem sich nicht mitdrehenden Gleitring 8 in den mit F bezeichneten Flächenbereichen, also sowohl gegenüber der Innenfläche des Gleitrings 8 als auch gegenüber dem Behälterrand 23 fest stehen bleibt. Auf diese Weise muß also z. B. beim Öffnungsvorgang nur der verhältnismäßig geringe Reibungswiderstand zwischen Gleitring 8 und Deckelwandung 19 überwunden werden, was z. B. mit einem (nicht dargestellten) in der Regel ohnehin als Deckelgriff vorhandenen Zentralknopf auf der Mitte des Deckels 2 erfolgen kann. Unter der Wirkung des Druckes im Topfinnenraum 7 wird der bei Bedarf flexible Gleitring 8 vollflächig dichtend an die Innenfläche 22 der Deckelwandung 19 angepreßt, gleichzeitig bleibt aber die leichte Verdrehbarkeit des Deckels 2 gegenüber dem relativ zu dem Dichtungsring 6 festgehaltenen Gleitring 8. Dichtungsring 6 und Gleitring 8 können einzeln oder gemeinsam aufgrund ihrer Eigenspannung in dem Winkelraum des Deckelrandes 5 austauschbar gehalten sein.

Die Ausführungsform von Figur 2 unterschiedet sich von der in Figur 1 dargestellten im wesentlichen dadurch, daß der Gleitring 8 mittels eines auf die Innenfläche 22 der Deckelwandung 19 aufgeschweißten Blechring 10 z. B. mit Spiel beweglich gehaltert ist, als zusätzliche Sicherung, damit der Gleitring 8 trotz seiner Eigenspannung, mit Hilfe welcher er in dem Winkelraum des Deckelrandes 5 gehalten ist, nicht aus dem Deckel 2 herausfällt, wenn dieser von dem Behälter 1 abgenommen und der Dichtungsring 6, welcher den Gleitring 8 zuvor aufgrund seiner Eigenspannung gehalten hat, z. B. zu Reinigungszwecken entnommen worden ist.

Bei der Ausführung von Figur 3 stellt der Gleitring 8 eine dichtend an die Innenfläche 22 der Deckelwandung 19 anliegende Oberflächenschicht des Dichtungsrings 6 im Bereich der Seitenflächen 16 und 17 des Basisabschnitts 13 dar, wobei sich die Gleitmaterialschicht bis zum Ende der Dichtlippe 15 und an die Innenfläche 22 der Deckelwandung 19 erstreckt, so daß die Dichtlippe 15 nicht unmittelbar an der Deckelwandung 19 anliegt, sondern nur über den Gleitring 8, welcher mittels als über den Deckelumfang verteilten Verbindungsbolzen ausgebildeten Umfangselementen 9 mit dem Dichtungsring 19 verankert ist.

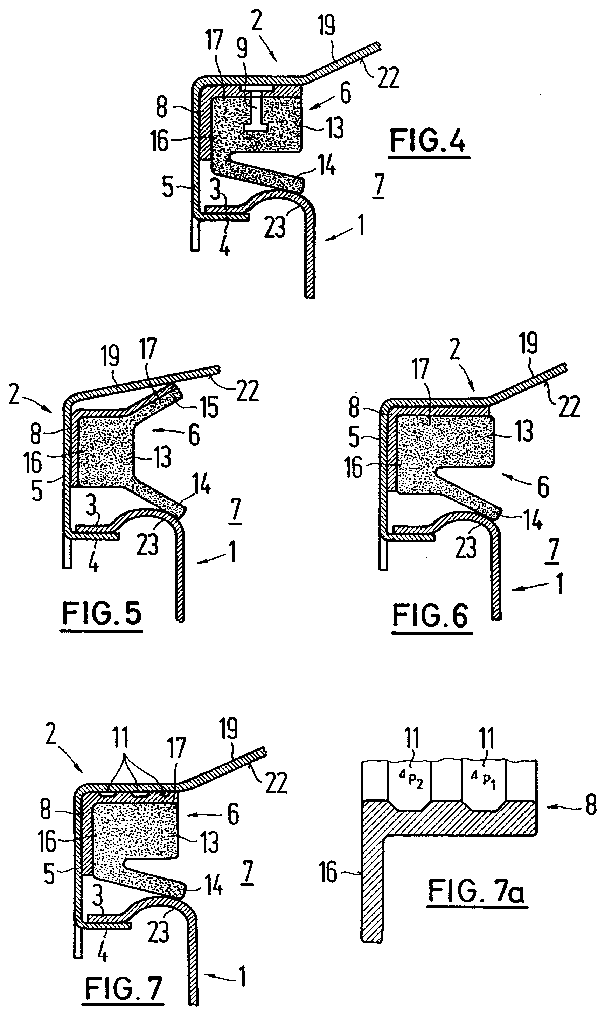

Figur 4 zeigt eine Ausführung der Erfindung, nach welcher der Dichtungsring 6 an dem Basisabschnitt 13 nur eine Dichtlippe 14 aufweist, welche sich in der dargestellten Verriegelungszustand an den Behälterrand 23 dichtend anlegt. Die Seitenflächen 16 und 17 des Basisteils 13 sind von dem Material des Gleitrings 8 überdeckt. Der Gleitring 8 ist dabei auch hier mittels über den Umfang verteilter, als Verbindungsbolzen ausgebildeter Umfangselemente 9 mit dem Basisabschnitt 13 des Dichtungsringes 6 mechanisch verankert. Die Ausgestaltung gemäß Figur 4 entspricht also im wesentlichen der von Figur 3 mit dem Unterschied, daß nach Figur 4 nur eine Dichtlippe 14 vorgesehen ist, welche sich an den Behälterrand 23 legt. Der Basisabschnitt 13 des Dichtungsringes 6 stützt sich über den abgewinkelten Gleitring 8 an seinen Seitenflächen 16 und 17 dichtend ab.

Die Ausgestaltung gemäß Figur 5 ist ähnlich derjenigen von Figur 3 mit dem Unterschied, daß nach Figur 5 der Gleitring 8 materialschlüssig mit dem Dichtungsring 6 verbunden ist, der Gleitring 8 also in dem dem Deckelrand 5 und der Dek-kelwandung 19 zugekehrten Bereich eine Oberflächenschicht des Dichtringes 6 darstellt und keine Umfangselemente 9 erforderlich sind.

Ähnlich unterscheidet sich die Ausführungsform nach Figur 6 von derjenigen nach Figur 4, wobei auch hier Dichtungsring 6 und Gleitring 8 aus einem Verbundwerkstoff bestehen, mit besonders guten Dichteigenschaften im Bereich des Dichtungsringes 6 und mit besonders guten Gleiteigenschaften im Bereich des Gleitringes 8.

Die Figuren 7 und 7a verdeutlichen, wie durch im Abstand voneinander auf der der Innenfläche 22 der Deckelwandung 19 zugekehrten Fläche des Gleitrings 8 umlaufende Nuten 11 dessen Dichtanlagedruck erhöht werden kann.

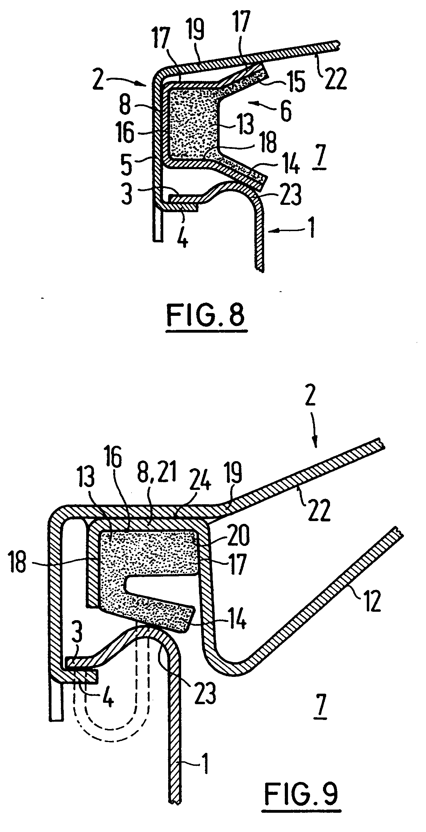

Bei der in Figur 8 dargestellten Ausführung ist der Dichtungsring 6 auf allen dem Deckelrand 5 und der Deckelwandung 19 zugekehrten Seitenflächen 16 bis 18 einschließlich der Dichtlippen 14, 15 mit einer den Gleitring 8 bildenden Materialschicht versehen. Auf diese Weise können sich beim Öffnungs- und Schließvorgang die einzelnen Elemente Behälter 1, Deckel 2 und Dichtungsring 6 beliebig zueinander bewegen.

Bei der Ausgestaltung gemäß Figur 9 ist der Dichtungsring 6 mit seinem Basisabschnitt 13 in eine nach unten offene Umfangsnut 20 einer Innenhaube 12 des Deckels 2 eingelassen, wobei sich die Dichtlippe 14 an den Behälterrand 23 dichtend anlegt. Der den Grund der Umfangsnut 20 bildende Wandungungsabschnitt 21 der Innenhaube 12 stellt den Gleitring 8 aus hierfür geeignetem Material, z. B. Stahl, wie die übrige Innenhaube 12, dar, so daß zwischen der Außenfläche 24 des Wandungsabschnitts 21 und der Innenfläche 22 der Deckelwandung 19 ein geringerer Reibungskoeffizient herrscht als zwischen der Dichtlippe 14 und dem Behälterand 23. Die Innenhaube 12 kann im Bereich des Wandungsabschnitts 21 auch an dem Deckel 2 geführt sein. Beim Verdrehen des Deckels 2 relativ zu der Innenhaube 12 kann ein z. B. zentrales Sicherheitsventil betätigt werden, d. h. eine Nulldrucksicherung im (nicht dargestellten) zentralen Deckelgriff gewährleistet sein.

### Bezugszeichenliste:

- 1: Behälter
- 2: Deckel
- 3: Randverriegelungselemente
- 4: Randverriegelungselemente
- 5: Deckelrand
- 6: Dichtungsring
- 7: Topfinnenraum
- 8: Gleitring
- 9: Umfangselemente
- 10: Blechring
- 11: Nuten
- 12: Innenhaube
- 13: Basisabschnitt des Dichtungsringes 6
- 14: Dichtlippe
- 15: Dichtlippe
- 16: Seitenfläche des Basisabschnitts 13
- 17: Seitenfläche des Basisabschnitts 13
- 18: Seitenfläche des Basisabschnitts 13
- 19: Deckelwandung
- 20: Umfangsnut
- 21: Wandungsabschnitt der Innenhaube 12
- 22: Innenfläche der Deckelwandung 19
- 23: Behälterrand
- 24: Außenfläche der Wandung 21

## Patentansprüche

1. Dampfdruckkochtopf mit einem für die Aufnahme von Kochgut bestimmten Behälter (1) und einem auf diesen aufsetzbaren Deckel (2), wobei der Behälter (1) und der Deckel (2) durch Verdrehen gegeneinander mittels Randverriegelungssegmenten (3, 4) nach Art einer Bajonettverbindung gegeneinander verriegelbar und wieder voneinander lösbar sind, und mit einem im Bereich des Deckelrandes (5) und des Behälterrandes (23) umlaufenden Dichtungsring (6) für die Abdichtung des Topfinnenraumes (7) in Verriegelungsstellung von Behälter (1) und Deckel (2) gegen Druckabfall, **dadurch gekennzeichnet**, daß beim bloßen Verdrehen des Deckels (2) gegenüber dem Behälter (1) der Reibungskoeffizient im Bereich der Anlage des Dichtungsrings (6) an dem Deckel (2) geringer ist als der Reibunskoeffizient im Bereich der Anlage des Dichtungsrings (6) an dem Behälter (1), oder umgekehrt.

2. Topf nach Anspruch 1, **dadurch gekennzeichnet**, daß dem Dichtungsring (6) im Bereich der Deckelanlage ein Gleitring (8) zugeordnet ist.

3. Topf nach Anspruch 2, **dadurch gekennzeichnet**, daß der Gleitring (8) Bestandteil des Dichtungsrings (6) oder mit diesem drehfest verbunden ist.

4. Topf nach Anspruch 2 oder 3, **dadurch gekennzeichnet**, daß der Gleitring (8) als selbständiges Bauteil am Deckel (2) gehalten ist und beim Verdrehen des Deckels (2) gegenüber dem Behälter (1) der Reibungskoeffizient zwischen Gleitring (8) und Deckel (2) geringer ist als der Reibungskoeffizient zwischen Gleitring (8) und Dichtungsring (6).

5. Topf nach Anspruch 2, **dadurch gekennzeichnet**, daß der Gleitring (8) materialschlüssig mit dem Dichtungsring (6) verbunden ist.

6. Topf nach einem der Ansprüche 2 bis 5, **dadurch gekennzeichnet**, daß der Gleitring (8) eine Oberflächenschicht des Dichtungsrings (6) bildet.

7. Topf nach einem der Ansprüche 2 bis 6, **dadurch gekennzeichnet**, daß der Gleitring (8) in einzelne Umfangsabschnitte unterteilt ist, welche eine gemeinsame abdichtende Umfangslinie bilden.

8. Topf nach einem der Ansprüche 2 bis 7, **dadurch gekennzeichnet**, daß der Gleitring (8) bzw. dessen einzelnen Umfangsabschnitte z. B. mittels Umfangselementen (9) mechanisch an dem Dichtungsring (6) montierbar ist bzw. sind.

9. Topf nach Anspruch 8, **dadurch gekennzeichnet**, daß die Umfangselemente (9) über den Umfang des Dichtungsrings (6) verteilte Verbindungsbolzen sind.

10. Topf nach einem der Ansprüche 1 bis 9, **dadurch gekennzeichnet**, daß der Dichtungsring (6) unter Bildung eines Gleitrings (8) aus einem Zwei-Komponenten-Verbundwerkstoff besteht.

11. Topf nach einem der Ansprüche 2 bis 10, **dadurch gekennzeichnet**, daß der Gleitring (8) aus Metall und/oder Kunststoff besteht.

12. Topf nach einem der Ansprüche 2 bis 11, **dadurch gekennzeichnet**, daß der Gleitring (8) Dichteigenschaften hat.

13. Topf nach einem der Ansprüche 2 bis 12, **dadurch gekennzeichnet**, daß der Gleitring (8) und/oder der Dichtungsring (6) aufgrund ihrer/seiner Eigenspannung im Deckel (2) gehalten sind/ist.

14. Topf nach einem der Ansprüche 2 bis 13, **dadurch gekennzeichnet**, daß der Gleitring (8) und/oder der Dichtungsring (6) in einem Winkel- oder Nutbereich des Deckelrandes (19) aufgenommen ist/sind.

15. Topf nach einem der Ansprüche 2 bis 14, **dadurch gekennzeichnet**, daß der Gleitring (8) ein flacher Materialstreifen bzw. eine dünne Materialschicht ist.

16. Topf nach einem der Ansprüche 2 bis 15, **dadurch gekennzeichnet**, daß der Gleitring (8) in seiner Außenkontur der Innenkontur des Deckels (2) angepaßt bzw. anpaßbar ist.

17. Topf nach einem der Ansprüche 2 bis 16, **dadurch gekennzeichnet**, daß der Gleitring (8) z. B. mittels Blechring (10) oder Blechsegmenten an dem Deckel (2) beweglich montierbar ist.

18. Topf nach einem der Ansprüche 2 bis 17, **dadurch gekennzeichnet**, daß in einer dem Deckel (2) zugewandten Seitenfläche (16, 17) des Gleitringes (8) in Abständen umlaufende Nuten (11) vorgesehen sind.

19. Topf nach einem der Ansprüche 2 bis 18, **dadurch gekennzeichnet**, daß der Gleitring (8) Abschnitt oder Teil einer gegenüber dem Deckel (2) verdrehbaren Innenhaube (12) ist.

20. Topf nach einem der Ansprüche 2 bis 19, **dadurch gekennzeichnet**, daß der Dichtungsring (6) in einer Umfangsnut (20), z. B. der Innenhaube (12), aufgenommen ist.

21. Topf nach einem der Ansprüche 1 bis 20, **dadurch gekennzeichnet**, daß der Dichtungsring (6) einen im Querschnitt im wesentlichen rechteckigen Basisabschnitt (13) aufweist, von welchem ein oder zwei Dichtlippen (14, 15) wegragen, von welchen wenigstens die eine Dichtlippe (14) in Schließstellung an dem Behälterrand (23) anliegt.

22. Topf nach einem der Ansprüche 2 bis 21, **dadurch gekennzeichnet**, daß der Dichtungsring (6) mit wenigstens einer Seitenfläche (16, 17, 18) des Basisabschnitts (13) an dem Gleitring (8) anliegt und/oder von ihm überdeckt ist.

23. Topf nach Anspruch 21 oder 22, **dadurch gekennzeichnet,** daß die andere Dichtlippe (15) an dem Gleitring (8) anliegt bzw. von diesem überdeckt ist.

24. Topf nach einem der Ansprüche 2 bis 23, **dadurch gekennzeichnet**, daß sämtliche der Deckelwandung (19) zugekehrte Außenflächen des Basisabschnitts (13) und der Dichtlippen (14, 15) entweder an dem Gleitring (8) anliegen bzw. diesem zugekehrt oder von dem Gleitring (8) überdeckt sind.

25. Topf nach einem der Ansprüche 19 bis 24, **dadurch gekennzeichnet**, daß sich die Innenhaube (12) z. B. mit einem den Grund der Umfangsnut (20) bildenden und als Gleitring (8) ausgestalteten Wandungsabschnitt (21) gleitend an der Innenfläche (22) der Deckelwandung (19) abstützt.

26. Topf nach einem der Ansprüche 20 bis 25, **dadurch gekennzeichnet**, daß der Dichtungsring (6) mit seinem Basisabschnitt (13) in der Umfangsnut (20), z. B. der Innenhaube (12), gehalten ist.

27. Dichtungsring für einen Dampfdruckkochtopf, **dadurch gekennzeichnet**, daß er ein oder mehrere Merkmale der Ansprüche 1 bis 26 aufweist.

28. Dichtungsring/Gleitring-Kombination für einen Dampfdruckkochtopf, **dadurch gekennzeichnet**, daß sie ein oder mehrere Merkmale der Ansprüche 1 bis 26 aufweist.
